# EUROPÄISCHE PATENTANMELDUNG

(11) **EP 0 831 212 A2**
(43) Veröffentlichungstag der Anmeldung: **25.03.1998**
(21) Anmeldenummer: 97114685.7
(22) Anmeldetag: 25.08.1997
(51) Int. Cl.: F02B 23/10

(54) **Direkteinspritzende Brennkraftmaschine**

(30) Priorität: 18.09.1996 DE 19637996
(71) Anmelder: Daimler-Benz Aktiengesellschaft, 70546 Stuttgart (DE)
(72) Erfinder: Bubeck, Günther, 73614 Schorndorf (DE)

(57) **Zusammenfassung**

Direkteinspritzende Brennkraftmaschinen weisen in jedem Arbeitselement einen Brennraum auf, welcher von einem innerhalb eines Zylinders längsbeweglichen Kolben und einer Innenwand eines Zylinderkopfes begrenzt ist. Oft ist vorgesehen, mit einer Einspritzdüse eines Injektors etwa kegelförmig Kraftstoff in den Brennraum einzuspritzen, wobei mit durch Einlaßventile zugeführter Verbrennungsluft ein zündfähiges Kraftstoffgemisch gebildet ist, welches durch einen zwischen Elektroden einer Zündkerze überspringenden Zündfunken zu zünden ist.

Um eine optimale Funktion der Brennkraftmaschine über einen langen Betriebszeitraum zu gewährleisten und darüber hinaus bei einer Schichtladung im Brennraum eine zuverlässige Zündung am Gemischmantel des eingespritzten Kraftstoffkegels zu erzielen, wird vorgeschlagen, die Zündkerze innerhalb einer in den Brennraum einragenden Zündkerzenhülse anzuordnen, wobei in der Zündkerzenhülse eine Zündkammer gebildet ist, in der die Elektroden der Zündkerze angeordnet sind, welche zu einem von der Einspritzdüse erzeugten Kraftstoffkegel offen ist. Dabei ragt eine Abgriffswand in einen Gemischmantel des Kraftstoffkegels ein.

## Beschreibung

Die Erfindung betrifft eine direkteinspritzende Brennkraftmaschine mit Schichtladung der im Oberbegriff des Anspruches 1 angegebenen Gattung.

Bei bekannten Schichtladungs-Brennkraftmaschinen mit Direkteinspritzung wird gegen Ende des Verdichtungshubes mit einem Injektor Kraftstoff direkt in einen Brennraum des Zylinders in der nahen Umgebung einer Zündkerze eingespritzt und ein fettes, leicht entflammbares Kraftstoff/Luft-Gemisch gebildet, dessen Zündung einen Druck- und Temperaturanstieg der mageren Gemischschichten bewirkt, so daß bei reduziertem Kraftstoffverbrauch insbesondere im Niedriglastbereich der Brennkraftmaschine für eine sichere Verbrennung gesorgt ist. In der den Brennraum begrenzenden Wand des Zylinderkopfes sind der Injektor und die Zündkerze zueinander geneigt angeordnet, wobei bevorzugt der Injektor die Zentrumsposition im Brennraum einnimmt. Dadurch ist verhindert, daß ein Teilstrahl des eingespritzten Kraftstoffes direkt auf die Zylinderwand auftrifft, wobei infolge einer Abkühlung des Kraftstoffes und einer Kraftstoffansammlung an der Zylinderwand eine unvollständige Verbrennung bzw. eine Erhöhung der Schadstoffemission der Brennkraftmaschine eintreten würde.

Die DE 43 24 642 A1 beschreibt eine solche direkteinspritzende Schichtladungs-Brennkraftmaschine, bei der die Einspritzdüse eines zentral in der Wandung des Zylinderkopfes vertikal angeordneten Injektors Kraftstoff etwa kegelförmig in den Brennraum einspritzt, wo gemeinsam mit separat zugeführter Verbrennungsluft ein zündfähiges Gemisch gebildet ist. Die Zündkerze zur Zündung des Gemisches ist weit in den Brennraum geführt, wobei die in den Bereich des Kraftstoffkegels ragenden Elektroden der Zündkerze bei jedem Einspritzvorgang mit Kraftstoff benetzt und abgekühlt werden. Mit zunehmender Betriebszeit der Brennkraftmaschine setzen sich Ablagerungen, insbesondere Ruß, auf den Elektroden ab, was die Ausbildung eines Zündfunkens zwischen den Elektroden behindern oder gar eine Funktionsunfähigkeit der Zündkerze hervorrufen kann.

Der Erfindung liegt daher die Aufgabe zugrunde, eine direkteinspritzende Brennkraftmaschine derart weiterzubilden, daß eine optimale Funktion der Brennkraftmaschine über einen langen Betriebszeitraum gegeben ist. Darüber hinaus ist es Aufgabe der Erfindung, ein direkteinspritzende Brennkraftmaschine zu schaffen, deren offene Schichtladung in der Brennkammer auch am Strahlrand des eingespritzten Kraftstoffkegels zuverlässig durch die Zündkerzenelektroden zündbar ist.

Erfindungsgemäß wird diese Aufgabe mit den Merkmalen des Patentanspruches 1 gelöst.

Die Zündkerze ist in einer in den Brennraum einragenden Zündkerzenhülse vollständig aufgenommen, wodurch die Elektroden der Zündkerze vor einer direkten Benetzung mit dem eingespritzten Kraftstoff und infolgedessen über einen langen Betriebszeitraum vor einer Verrußung geschützt sind. Im brennkammerseitigen Endabschnitt der Zündkerzenhülse ist eine die Elektroden der Zündkerze enthaltende Zündkammer gebildet, welche zum von der Einspritzdüse des Injektors erzeugten Kraftstoffkegel offen ist. Ist die Zündkammer am Rand des Kraftstoffkegels angeordnet, so wird beim Verdichtungshub des Kolbens in der Zündkammer ein für eine Zündung ausreichend fettes Kraftstoff/Verbrennungsluft-Gemisch konzentriert, wodurch die Zündung einer vollständigen offenen Schichtverbrennung mit reduziertem Kraftstoffverbrauch und geringen Schadstoffemissionen erreicht ist. Überdies ist die Ausbildung einer Zündkammer im Hinblick auf eine Serienfertigung der Brennkraftmaschine bzw. der Herstellung eines Mehrzylinder-Motors von großem Vorteil, da bei einem gegebenenfalls notwendigen Einspritzdüsenwechsel die Gemischzustände im eingespritzten Kraftstoffkegel geändert sind, jedoch die Bereitung eines leicht entflammbaren Gemischvolumens in der Zündkammer bisher notwendige Einstellungskorrekturen der Einspritzparameter überflüssig macht.

Vorzugsweise durchsetzt die Zündkerzenhülse unter einem Neigungswinkel α der Hülsenachse gegen die Längsachse des Injektors den Zylinderkopf, welcher größer ist als der Öffnungswinkel des einzuspritzenden Kraftstoffkegels. Dadurch ragt eine der Einspritzdüse gegenüberliegende Abgriffswand im zündkammerseitigen Endabschnitt der Zündkerzenhülse in den Gemischmantel des Kraftstoffkegels ein, wodurch bei einer Kraftstoffeinspritzung eine geringe Gemischmenge aus dem Gemischmantel des Kraftstoffkegels auf die Abgriffswand prallt und dem Impuls folgend in die Zündkammer eintritt. Das Volumen der Zündkammer ist ein Teil des Brennraumvolumens und mit der abgegriffenen Gemischmenge ist in der Zündkammer dem geometrisch in einem Magergemischgebiet außerhalb des Kraftstoffkegels liegenden Elektrodenpaar der Zündkerze ein leicht entflammbares, kraftstoffreiches Gemisch zur zuverlässigen Zündung bereitgestellt. Der in der Zündkammer erzeugte Flammstrahl entzündet den sich ausdehnenden Kraftstoffkegel mit verschiedenen Konzentrationsschichten des Kraftstoff/Luft-Gemisches auf breiter Front, so daß im Niedriglastbereich der Brennkraftmaschine eine offene Schichtverbrennung mit geringem Einfluß unsymmetrisch verteilter Gemischkonzentrationen infolge der Strähnigkeit der Kegelstrahlen auf die eingestellten Verbrennungsparameter erzielt ist.

Um überdies den Zündvorgang in der Zündkammer noch unempfindlicher gegenüber den durch die Einspritzdüse bedingten charakteristischen Eigenheiten des Kraftstoffkegels beim Einspritzen durchführbar zu machen, ist vorteilhaft in die Abgriffswand mindestens eine Belüftungsbohrung eingebracht. Die Belüftungsbohrung durchsetzt die Abgriffswand in radialer Überdeckung mit den Elektroden der Zündkerze und fixiert somit das Kraftstoff/Luft-Gemisch in der Zündkammer in einer für die Zündung vorteilhaften Lage nahe den Elektroden, wobei durch die Größe der Belüftungsbohrung die systemspezifischen Zündparameter abstimmbar sind.

Die Zündkerzenhülse ist vorteilhaft zylindrisch ausgestaltet und weist einen Absatz auf, welcher auf der Außenseite die Lage der Zündkerzenhülse im Zylinderkopf festlegt und auf der Innenseite der Zündkerzenhülse ein Widerlager für einen Schraubenkopf der Zündkerze darstellt. Ist der durchmesserverengte Abschnitt der Zündkerzenhülse zwischen dem Absatz und dem die Zündkammer ausbildenden brennraumseitigen Ende mit einem Innengewinde versehen, in das ein Gewindeschaft der Zündkerze einschraubbar ist, so sind bei einer bis zur Anlage des mit dem Gewindeschaft verbundenen Schraubenkopfes an dem Absatz eingeschraubten Zündkerze die Elektroden optimal in der Zündkammer positioniert. Somit ist gewährleistet, daß bei einem gegebenenfalls verschleißbedingten Austausch der Zündkerze die neue Zündkerze auf einfache Art in die vorgesehene Position in der Zündkerzenhülse einschraubbar ist.

In einer weiteren vorteilhaften Ausführung ist der Injektor an seinem düsenseitigen Ende in einer Düsenaufnahme geführt, wodurch eine präzise Positionierung der Einspritzdüse im Brennraumdach erzielt ist, wobei durch eine koaxiale Lage der Längsachse des Injektors zum Kolben die Ausbildung einer offenen Schichtladung in einem vorteilhaft im Bereich des Zylinderkopfes kegelförmig ausgestalteten Brennraum verbessert ist. Hierbei verläuft die Innenwand des Zylinderkopfes vorteilhaft parallel zum Gemischmantel des eingespritzten Kraftstoffkegels, wodurch über die Ausbildung eines Schichtkegels beim Verdichtungshub des Kolbens hinaus eine gute Spülung des Brennraumes durch die eingelassene Verbrennungsluft ermöglicht ist.

Vorteilhaft sind die Düsenaufnahme und die Zündkerzenhülse endseitig ineinandergeführt und somit die gegenseitige Ausrichtung dieser Bauteile präzisiert, wobei eine kompakte Bauweise der Baugruppe des Zylinderkopfes entsteht. Bevorzugt weist die Zündkerzenhülse in dem die Zündkammer ausbildenden und die Düsenaufnahme in Richtung der Längsachse überdeckenden Endabschnitt eine Aussparung auf und ist in die Düsenaufnahme geführt . Zur Vergrößerung der projizierten Eintrittsfläche der Zündkammer zum Eintritt einer von der Abgriffswand aus dem Gemischmantel des eingespritzten Kraftstoffkegels abgespaltenen Kraftstoffmenge weist die Aussparung in dem der Abgriffswand diametral gegenüberliegenden Abschnitt der Zündkerzenhülse die Form des in Richtung der Längsachse projiziert überdeckten Abschnitts der Stirnfläche des Injektors auf.

In die brennraumseitige Stirnfläche des Kolbens kann eine Einsenkung eingebracht sein, wodurch der Brennraum in Richtung der Längsachse des Injektors verlängert ist. Durch die weiter geführten Strahlen des Kraftstoffkegels bei der Einspritzung im Niedriglastbetrieb der Brennkraftmaschine ist die Schichtverbrennung begünstigt und im Hochlastbetrieb der Brennkraftmaschine durch die Ausbildung von turbulenten Quetschströmungen die Verbrennungsqualität verbessert.

Vorteilhaft ragt die Abgriffswand der Zündkerzenhülse in die Einsenkung ein, so daß bei kompakter Brennraumkonstruktion die Zündkerze und die Elektroden erfindungsgemäß durch die Zündkerzenhülse geschützt positionierbar sind. Das Einragen der Abgriffswand in den Brennraum bzw. in die Einsenkung im Kolben und damit das Einragen in den Gemischmantel des Kraftstoffkegels bei der Einspritzung zum Abgriff einer geringen Kraftstoffmenge ist durch den zwischen der Längsachse des Injektors und der Hülsenachse der Zündkerzenhülse eingeschlossenen Winkel α bestimmbar. Er ist größer als der Öffnungswinkel des Kraftstoffkegels zwischen der Längsachse und dem Gemischmantel und beträgt vorteilhaft etwa 40° bis 75°, wodurch die in den Gemischmantel des Kraftstoffkegels einragende Abgriffswand maximal den dreißigsten Teil des Gesamtkraftstoffeintrags der Einspritzdüse zur Ausbildung eines von dem zwischen den Elektroden der Zündkerze überspringenden Zündfunken zu zündenden Kraftstoff/Luft-Gemisches in die Zündkammer abführt.

Das anteilige Volumen der Zündkammer an dem Gesamtvolumen des Brennraumes beträgt vorteilhaft maximal den fünfzigsten Teil, um eine homogene Flammausbreitung im Brennraum zu begünstigen.

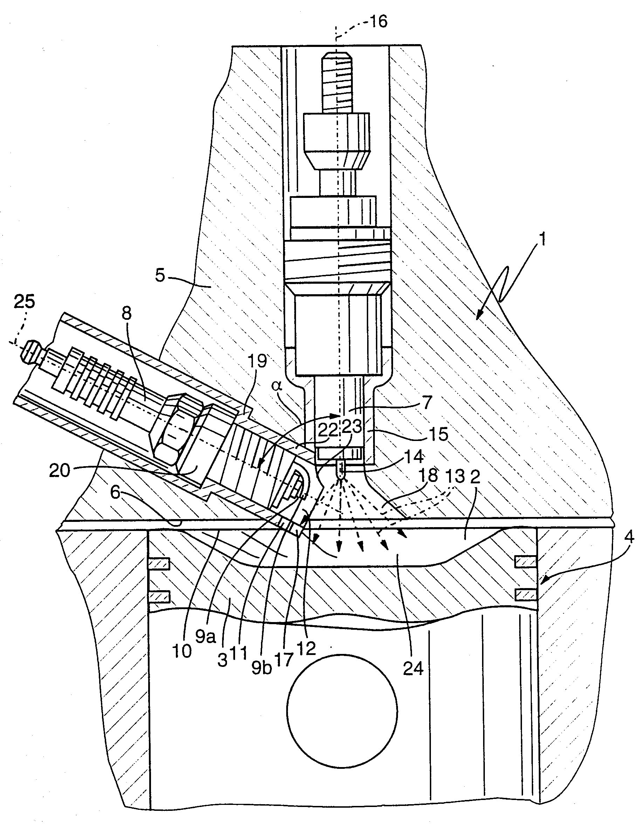

Ein Ausführungsbeispiel der Erfindung ist nachstehend anhand der Zeichnung näher erläutert, deren einzige Zeichnungsfigur eine geschnittene Teilansicht eines Zylinders mit einem Zylinderkopf einer direkteinspritzenden Brennkraftmaschine zeigt.

Das dargestellte Arbeitselement 1 einer direkteinspritzenden Brennkraftmaschine weist einen Brennraum 2 auf, welcher von einem innerhalb eines Zylinders 4 längsbeweglichen Kolben 3 und einer Innenwand 6 eines Zylinderkopfes 5 begrenzt ist. In dem Zylinderkopf 5 ist ein Injektor 7 angeordnet, dessen Längsachse 16 koaxial zum Kolben 3 verläuft. Der Injektor 7 umfaßt eine Einspritzdüse 14 zum kegelförmigen Einspritzen von Kraftstoff in den Brennraum 2, wo mit durch hier nicht dargestellte Einlaßventile zugeführter Verbrennungsluft ein zündfähiges Kraftstoff/Luft-Gemisch gebildet ist. Das Gemisch wird von einem Zündfunken gezündet, welcher zwischen den Elektroden 9a, 9b einer in den Brennraum 2 ragenden Zündkerze 8 überspringt.

Um eine optimale Funktion der Brennkraftmaschine über einen langen Betriebszeitraum zu gewährleisten und darüber hinaus eine Schichtladung im Brennraum 2 zu ermöglichen, wobei die Verbrennung auch am Strahlrand des Kraftstoffkegels 13 zuverlässig zündbar ist, ist die Zündkerze 8 vor Verrußung geschützt in einer in den Brennraum 2 einragenden Zündkerzenhülse 10 aufgenommen. Die Zündkerze 8 ist in ein brennkammerseitig in die Zündkerzenhülse 10 eingebrachtes Innengewinde 21 mit einem Gewindeschaft 26 eingeschraubt, wobei die Einschraubtiefe der Zündkerze 8 durch die Anlage eines mit dem Gewindeschaft 26 verbundenen Schraubenkopfes 20 an einem Absatz 19 der Zündkerzenhülse 10 definiert ist. Dadurch ist im brennkammerseitigen Endabschnitt 22 der Zündkerzenhülse 10 eine Zündkammer 12 gebildet, in der die Elektroden 9a, 9b angeordnet sind, wobei die Masseelektrode 9b der Einspritzdüse 14 zugewandt liegt.

Die zylindrische Zündkerzenhülse 10 ist mit ihrer Hülsenachse 25 unter einem Winkel α gegen eine Längsachse 16 des Injektors 7 geneigt im Zylinderkopf 5 angeordnet, wobei der Absatz 19 die Außenseite der Zündkerzenhülse 10 in der vorgesehenen axialen Lage bezüglich der Hülsenachse 25 festlegt. Der Neigungswinkel α ist größer als der Öffnungswinkel zwischen der Längsachse 16 und dem Gemischmantel 18 des von der Einspritzdüse 14 erzeugten Kraftstoffkegels 13, wodurch eine der Einspritzdüse 14 diametral gegenüberliegende Abgriffswand 17 im Endabschnitt 22 der Zündkerzenhülse 10, welcher die Zündkammer 12 umfaßt, in den Gemischmantel 18 des Kraftstoffkegels 13 einragt. Spritzt die Einspritzdüse 14 Kraftstoff kegelförmig in den Brennraum 2 ein, so prallt ein Teil des im Gemischmantel 18 des Kraftstoffkegels 13 geführten kraftstoffreichen Gemisches auf die Abgriffswand 17 und wird dem eigenen Impuls folgend in die Zündkammer 12 zurückgeschleudert. In der Zündkammer 12 wird das zündfähige Kraftstoff/Luft-Gemisch durch einen zwischen den Elektroden 9a, 9b der Zündkerze 8 überspringenden Zündfunken gezündet, d.h. in der Zündkammer erfolgt eine Initialzündung. Nach der Zündung entwickelt sich in der Zündkammer 12 ein auf den Brennraum 2 gerichteter Flammstrahl, welcher den Hauptteil des Verbrennungsgemisches auf breiter Front entzündet. Die Elektroden 9a, 9b sind außerhalb des Kraftstoffkegels 13 angeordnet und werden daher beim Einspritzvorgang nicht mit Kraftstoff benetzt, so daß sie über einen langen Betriebszeitraum rußablagerungsfrei bleiben und damit sicher zünden. Im Schichtladebetrieb der Brennkraftmaschine ist den außerhalb des Kegels 13 in einem Gebiet mit magerem Kraftstoff/Luft-Gemisch angeordneten Elektroden 9a, 9b innerhalb der Zündkammer 12 durch den Abgriff einer kleinen Gemischmenge lokal ein leicht entflammbares Gemisch zur Zündung bereitgestellt. Während das abgespaltene Gemisch in der Zündkammer 12 etwa den dreißigsten Teil des Gesamtgemisches im Brennraum 2 beträgt, beträgt der Volumenanteil der Zündkammer 12 am Gesamtvolumen des Brennraums 2 weniger als den fünfzigsten Teil, daher ist in der Zündkammer 12 ein höherer Gemischanteil vorhanden.

Zur Festlegung des Gemischvolumens in der Zündkammer 12 auf die Lage der Elektroden 9a, 9b ist die Zündkerzenhülse 10 im Endabschnitt 22 benachbart der Abgriffswand 17 von einer Belüftungsbohrung 11 durchsetzt, welche in radialer Überdeckung mit den Elektroden 9a, 9b angeordnet ist. Durch die Lage und die Größe der Belüftungsbohrung 12 ist die Gemischqualität in der Zündkammer 12 unabhängig von den unterschiedlichen Gemischkonzentrationen im Kraftstoffkegel 13, welche durch die Einbaulage der Einspritzdüse 14 und den düsenfertigungstechnisch bedingten, charakteristischen Eigenarten des eingespritzten Kraftstoffkegels, insbesondere der Strähnigkeit der Kraftstoffstrahlen, bestimmt ist. Somit ist bei einem gegebenenfalls notwendigen Austauschen des Injektors 7 mit der Einspritzdüse 14 für eine gleichbleibende Verbrennungsqualität im Betrieb der Brennkraftmaschine ohne weiterführende Abstimmungsmaßnahmen gesorgt.

Der dem Zylinderkopf 5 zugeordnete Teil des Brennraumes 2 ist kegelig ausgeführt, wobei die Innenwand 6 des Zylinderkopfes 5 parallel zum Gemischmantel des Kraftstoffkegels 13 verläuft. In die brennraumseitige Stirnfläche des Kolbens 3 ist eine muldenartige Einsenkung 24 eingebracht, welche den Brennraum 2 erweitert und in die die Abgriffswand 17 der Zündkerzenhülse 10 einragt. Neben einer homogenen Verbrennung eines durch turbulente Quetschströmungen bereiteten Kraftstoff/Luft-Gemisches im Hochlastbereich der Brennkraftmaschine ist durch die symmetrische Konstruktion des Brennraums 2 im Niedriglastbereich der Brennkraftmaschine ein verbessertes Durchbrennen der Schichtladung erreicht.

Der mit der Einspritzdüse 14 zentral in den Brennraum 2 einragende Injektor 7 ist in seinem düsenseitigen Endabschnitt in einer Düsenaufnahme 15 geführt, welche den Injektor 7 präzise positioniert und einen gegebenenfalls notwendigen Austausch des Injektors sowie die Ausrichtung dessen Einspritzdüse erleichtert. In die Düsenaufnahme 15 ist endseitig die Zündkerzenhülse 10 eingeführt, wodurch diese Bauteile gegenseitig die jeweilige Drehwinkellage festlegen, wobei die Drehwinkellage der Zündkerzenhülse 10 die Lage der Abgriffswand 17 und der Belüftungsbohrung 11 sowie der Masseelektrode 9b fixiert.

Um die auf den Ursprung des Kraftstoffkegels 13 projizierte Eintrittsfläche der Zündkammer 12 zu erweitern, ist in den die Düsenaufnahme 15 berührenden Bereich des Endabschnitts 22 der Zündkerzenhülse 10 eine Aussparung 23 eingebracht. Die Form der Aussparung 23 entspricht dabei dem in Richtung der Längsachse 16 projizierten Abschnitt der Zündkerzenhülse 10 auf die Stirnseite des Injektors 7.

## Patentansprüche

1. Direkteinspritzende Brennkraftmaschine mit mindestens einem Arbeitselement (1) und darin jeweils einem Brennraum (2), welcher von einem innerhalb eines Zylinders (4) längsbeweglichen Kolben (3) und einer Innenwand (6) eines Zylinderkopfes (5) begrenzt ist, und einem Injektor (7) mit einer Einspritzdüse (14) zum etwa kegelförmigen Einspritzen von Kraftstoff in den Brennraum (2), in dem mit durch Einlaßventile zugeführter Verbrennungsluft ein zündfähiges Kraftstoffgemisch gebildet ist, welches durch einen zwischen Elektroden (9a, 9b) einer Zündkerze (8) überspringenden Zündfunken zu zünden ist,
dadurch gekennzeichnet, daß die Zündkerze (8) in einer in den Brennraum (2) einragenden Zündkerzenhülse (10) aufgenommen ist, wobei eine zu einem von der Einspritzdüse (14) erzeugten Kraftstoffkegel (13) offene Zündkammer (12) in der Zündkerzenhülse (10) gebildet ist, in der die Elektroden (9a, 9b) der Zündkerze (8) angeordnet sind, wobei eine Abgriffswand (17) in einen Gemischmantel (18) des Kraftstoffkegels (13) einragt.

2. Brennkraftmaschine nach Anspruch 1,
dadurch gekennzeichnet, daß die Zündkerzenhülse (10) unter einem Winkel (α) einer Hülsenachse (25) gegen eine Längsachse (16) des Injektors (7) geneigt den Zylinderkopf (5) durchsetzt und die Abgriffswand (17) der Einspritzdüse (14) gegenüberliegt.

3. Einspritzdüse nach Anspruch 2,
dadurch gekennzeichnet, daß die Abgriffswand (17) an einem in die Zündkammer (12) ragenden Endabschnitt der Zündkerzenhülse (10) gebildet ist.

4. Brennkraftmaschine nach Anspruch 2 oder 3,
dadurch gekennzeichnet, daß die Elektroden (9a, 9b) der Zündkerze (8) außerhalb des Gemischmantels (18) des Kraftstoffkegels (13) angeordnet sind.

5. Brennkraftmaschine nach einem der vorhergehenden Ansprüche,
dadurch gekennzeichnet, daß die Zündkerzenhülse (10) zylindrisch ausgestaltet ist und einen Absatz (19) aufweist, an den ein Schraubenkopf (20) der Zündkerze (8) zur Anlage bringbar ist.

6. Brennkraftmaschine nach Anspruch 5,
dadurch gekennzeichnet, daß die Zündkerzenhülse (10) zwischen dem Absatz (19) und der Zündkammer (12) mit einem Innengewinde (21) versehen ist, in das die Zündkerze (8) mit einem Gewindeschaft (26) einschraubbar ist.

7. Brennkraftmaschine nach Anspruch 2 oder 3,
dadurch gekennzeichnet, daß die Abgriffswand (17) von mindestens einer Belüftungsbohrung (11) in radialer Überdeckung mit den Elektroden (9a, 9b) durchsetzt ist.

8. Brennkraftmaschine nach einem der vorhergehenden Ansprüche,
dadurch gekennzeichnet, daß der Injektor (7) an seinem der Einspritzdüse (14) benachbarten Ende in einer Düsenaufnahme (15) geführt ist.

9. Brennkraftmaschine nach Anspruch 8,
dadurch gekennzeichnet, daß die Düsenaufnahme (15) und die Zündkerzenhülse (10) endseitig ineinandergeführt sind.

10. Brennkraftmaschine nach Anspruch 9,
dadurch gekennzeichnet, daß der die Düsenaufnahme (15) in Richtung der Längsachse (16) überdeckende Abschnitt der Zündkerzenhülse (10) eine dem Stirnquerschnitt des Injektors (7) entsprechende Aussparung (23) aufweist und die Zündkerzenhülse (10) in die Aussparung (23) der Düsenaufnahme (15) geführt ist.

11. Brennkraftmaschine nach einem der Ansprüche 1 bis 10,
dadurch gekennzeichnet, daß der Brennraum (2) im Bereich des Zylinderkopfes (5) kegelförmig ausgestaltet ist.

12. Brennkraftmaschine nach Anspruch 11,
dadurch gekennzeichnet, daß die Innenwand (6) des Zylinderkopfes (5) parallel zum Gemischmantel (18) des Kraftstoffkegels (13) verläuft.

13. Brennkraftmaschine nach einem der Ansprüche 1 bis 12,
dadurch gekennzeichnet, daß die Längsachse (16) des Injektors (7) koaxial zum Kolben (3) liegt.

14. Brennkraftmaschine nach einem der Ansprüche 1 bis 13,
dadurch gekennzeichnet, daß in die brennraumseitige Stirnfläche des Kolbens (3) eine Einsenkung (23) eingebracht ist.

15. Brennkraftmaschine nach Anspruch 14,
dadurch gekennzeichnet, daß die Abgriffswand (17) der Zündkerzenhülse (10) in die Einsenkung (23) einragt.

16. Brennkraftmaschine nach einem der Ansprüche 2 bis 4,
dadurch gekennzeichnet, daß der zwischen der Längsachse (16) und der Hülsenachse (25) eingeschlossene Winkel (α) größer ist als der zwischen der Längsachse (16) und dem Gemischmantel (18) eingeschlossene Öffnungswinkel des Kraftstoffkegels (13).

17. Brennkraftmaschine nach Anspruch 16,
dadurch gekennzeichnet, daß der Winkel (α) etwa 40° bis 75° beträgt.

18. Brennkraftmaschine nach einem der vorhergehenden Ansprüche,
dadurch gekennzeichnet, daß die Abgriffswand (17) maximal den dreißigsten Teil des Gesamtkraftstoffeintrags der Einspritzdüse (14) in den Brennraum (2) aus dem Gemischmantel (18) des Kraftstoffkegels (13) in die Zündkammer (12) abführt.

19. Brennkraftmaschine nach einem der vorhergehenden Ansprüche,
dadurch gekennzeichnet, daß das anteilige Volumen der Zündkammer (12) maximal den fünfzigsten Teil des Gesamtvolumens des Brennraums (2) beträgt.
